Europäisches Patentamt

(19) European Patent Office

Office européen des brevets

(11) Publication number: **0 212 714**
**B1**

# (12) EUROPEAN PATENT SPECIFICATION

(45) Date of publication of the patent specification:
06.12.89

(51) Int. Cl.⁴: **B01J 2/00, B01J 2/16**

(21) Application number: 86201291.1

(22) Date of filing: 22.07.86

(54) **Process for the preparation of granules and granules obtained by this process.**

(30) Priority: 26.07.85 NL 8502133

(43) Date of publication of application:
04.03.87 Bulletin 87/10

(45) Publication of the grant of the patent:
06.12.89 Bulletin 89/49

(84) Designated Contracting States:
AT BE CH DE FR GB IT LI NL SE

(56) References cited:
FR-A- 2 132 145
GB-A- 2 129 702
US-A- 3 516 813

(73) Proprietor: STAMICARBON B.V., Mijnweg 1, NL-6167 AC Geleen(NL)

(72) Inventor: Monhemius, Leo, Dravik 12, Malden(NL)
Inventor: Mutsers, Stanislaus Martinus Petrus, Drossaertweide 14, NL-6438 HV Schinnen(NL)

## Description

The invention relates to a process for the preparation of granules from a liquid composition by spraying the liquid composition in a granulation zone onto or over solid particles, present in the granulation zone, that are being kept in motion, as a result of which layered growth of these particles takes place, withdrawing a particle stream from the granulation zone, dividing this stream into a stream of particles of the desired size, a stream of oversize particles and a stream of undersize particles, the stream of undersize particles being returned at least in part to the granulation zone and the stream of oversize particles being stored in a buffer vessel and subsequently . being returned at least in part, after size reduction, to the granulation zone.

Various granulation processes are known in which layered growth of the particles in the granulation zone takes place.

TVA bulletin Y 158 describes TVA drum granulation process, in which granulation is effected via a so-called falling curtain process, in which the particles are moved upwards by blades and subsequently fall down as a curtain. The liquid composition is sprayed by sprayers that are directed at the particle curtain, as a result of which the liquid is deposited on the particles.

European patent 26918 describes a so-called spouted bed granulation in which the liquid composition is centrally passed through a mass of particles, from the bottom upwards in a gas stream and a quantity of the particles of this mass is entrained by the gas stream, the liquid composition being deposited on the particles, which subsequently, when the velocity of the gas stream decreases, drop back on the surface of the mass of particles.

In both of the above-mentioned processes it has been found necessary to take measures to counteract instability of the granulation process, which is manifested in a strongly fluctuating granule size distribution of the product stream leaving the granulation zone. This variation in granule size distribution is highly undesirable as it has an adverse effect on the production capacity and also because extra facilities are necessary to keep the granule temperature, often an important quality factor, constant.

Another type of granulation process with layered particle growth is the process for granulation in a fluid bed.

Such a process is described in US patent 4,219,589. In this process the liquid composition is sprayed in the form of fine droplets that solidify on nuclei in a fluidized bed. In this way of spraying it appears that new nuclei are readily formed, and these are entrained either with the product, or with the air discharged from the fluidization zone, and must be separated therefrom. Perhaps droplets not trapped by particles in the bed are responsible for this.

It has been found that such granulation processes suffer less often from instability. An important disadvantage of these processes is that the requisite very fine distribution of the liquid composition entails a high energy consumption and a high dust emission.

European patent 141436 discloses a fluid bed granulation process in which the liquid composition leaves a liquid distribution device in the form of a virtually closed, conical film, and in which nuclei from the bed are passed through the film by means of a powerful gas stream, so that they are moistened. This method of liquid supply requires a lower energy consumption and results. in less dust being emitted.

Another consequence, however, is that stable process operation is difficult. This probably has to do with the fact that few new nuclei are formed during distribution of the liquid composition.

It has been found that there is no process instability if during distribution of the liquid composition in the bed a substantial amount of new nuclei is formed.

It is known to improve the stability of granulation processes in which there is layered particle growth by installation of buffer vessels in the recycle streams to the granulation zone. A process in which such a measure is applied is known from the above-mentioned European patent 26918. In it, the process stability is improved by returning both the stream of oversize partciels and the stream of undersize prticles via a buffer vessel in metered amounts to the granulation zone, the amounts depending on the measured variation in the average particle size of the granules discharged from the granulation zone.

A disadvantage of this process is that a buffer vessel must be included both in the stream of oversize particles and in the stream of undersize particles. Since the caking tendency of particles increases with decreasing size and with increasing temperature, the process further has the disadvantage that cooling generally is necessary before storage. Another disadvantage is that the control is based on the measured variation in the size distribution of the granule stream discharged from the granulation zone, necessitating use of a measurement and control system, which requires additional equipment.

The invention aims to provide a simplified process that does not have the above-mentioned disadvantages while stable process operation still is realized.

According to the invention the process is characterized in that a particle stream is returned at a constant flow rate from the buffer vessel to the granulation zone after size reduction in a size reduction device to a size desirable for use as nuclei and the stream of undersize particles is returned direct by to the granulation zone..

A constant flow rate can, for instance, be achieved in a simple manner by use of a buffer vessel from which a variable mass flow is discharged to the size reduction device by means of a feed screw.

An advantage of this process is that only one buffer vessel needs to be installed. This advantage is even augmented because the stream of undersize particles, which in the process according to the invention can be returned direct to the granulation zone, is much larger than the stream of oversize particles, so that a relatively small buffer vessel will suffice.

Another advantage of the process according to the invention is that, since there is no buffer vessel in the stream of undersize particles, cooling of the recycle stream to the granulation zone can often be done without, on account of which less heat needs to be supplied to reach the desired granulation temperature.

In principle, all kinds of liquid material, in the form of a solution, a melt as well as a suspension, can be applied. Examples of materials that can be granulated are ammonium salts, such as ammonium nitrate, ammonium sulphate or ammonium phosphate, as well as mixtures thereof, single fertilizers, such as calcium ammonium nitrate, magnesium ammonium nitrate, compound NP and NPK fertilizers, urea and ureacontaining compositions, sulphur, organic substances such as bisphenol and caprolactam, and the like.

The process can suitable be used for various granulation processes in which layered growth of the particles in the granulation zone takes place, for instance fluid bed granulation, spouted bed granulation, disk granulation or drum granulation, more in particular falling curtain granulation.

The flow rate of the stream of particles of reduced size that is returned to the granulation zone, is of consequence for the size distribution of the granule stream from the granulation zone, and consequently for the feed to the buffer vessel. Practice has shown that a small buffer capacity will suffice.

In an advantageous embodiment of the process according to the invention there is a possibility of sending, besides the stream of oversize particles, if necessary, a stream of particles having a suitable size to the buffer vessel and/or of separating a portion of the particles in the buffer vessel and, if desired, removing them from the process. These measures permit of further reduction of the buffer vessel volume. The particles that are separated can be sent to a melting device or a dissolving vessel, and the melt or solution obtained can, optionally mixed with the liquid composition to be granulated, subsequently be passed to the granulator.

By preference, the flow rate of the particle stream that is discharged from the buffer vessel and returned to the granulation zone after size reduction, is set such that the latter flow rate is virtually equal to the flow rate of the stream of oversize particles.

The result of the process according to the invention is improved if a stream of dust particles is separated from the particle stream returned to the granulation zone after size reduction. This may take place, for instance, in a wind sifter. Dust particles are here understood to mean particles having a size smaller than 1 mm, more in particular smaller than 0.75 mm. The utmost limit of the particle stream that is separated, is considered to be a limitation to particles having a size smaller than 0.2 mm. The advantage of this measure is that the risk of caking of particles, resulting in lower roundness and strength of the particles, is reduced, as is dust emission.

In addition, it is desirable to remove not only the dust particles but also the oversize particles from the recycle flow. This will prevent the presence of fragments in the end product. In particular the particles having a size equal to or larger than that of the particles having the desired size are removed. Both the oversize particles and the dust particles are transported to a melting device or dissolving vessel and the melt or solution obtained there optionally is subsequently mixed with the liquid composition to be granulated.

For good process operation it is important that the spread in particle size in the particle stream leaving the size reduction device is minimal. In practice, therefore, preferably a pressure crusher, in particular a roll crusher, is used. If there are large differences in the size of the particles in the buffer vessel, there is advantage in using a double-roll crusher.

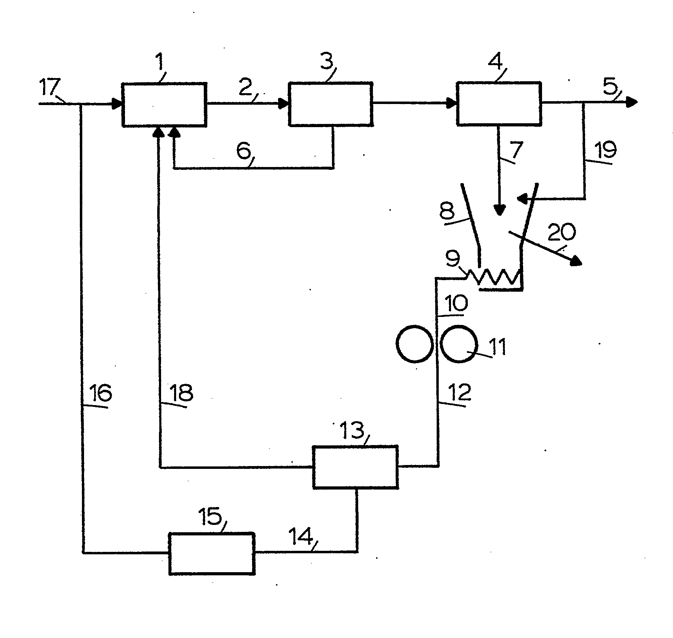

The process according to the invention will be elucidated with reference to the figure.

From granulation device 1, through 17 a liquid composition is distributed over an amount of particles that are being kept in motion. To this end, the particles can be brought into a fluidized state and the feed can be supplied by means of a number of distribution devices, regularly divided over the bed and preferably projecting into the bed from the bottom upwards, such as sprayers. Other granulation devices, such as those operating with a spouted bed of solid particles or with a falling curtain of solid particles, may, however, also be used. Through 2, the crude product is passed over a fine screen 3 and subsequently over a coarse screen 4, after which the product of the desired granule size is discharged through 5. The stream of undersize particles from the fine screen is returned direct to the granulation zone through 6. The stream of oversize particles from the coarse screen is sent to buffer vessel 8 through 7. From buffer vessel 8, a particle stream is passed through 10 to crusher 11 at a constant flow rate, use being made of a feed screw 9. From the particles stream sent from the crusher through line 12 to the granulation device, in a screening section 13 the oversize and undersize particles are separated and subsequently sent through 14 to a melting or dissolving device 15, following which the liquid composition, mixed with the liquid composition supplied through 17, is passed through 16, to the granulation zone. The residual particle stream is returned through 18 to the granulation zone. Through 19 particles of the desired size from product stream 5 can be passed to buffer vessel 8. Through 20 particles can be discharged from the buffer vessel.

The process will be elucidated further with reference to the following examples.

Example I

Urea is granulated in a fluid bed granulator. In a cylindrical fluid bed with a diameter of 45 cm, granules are kept at a temperature of 110°C. At the bottom the fluid bed is bounded by a porous plate consisting to 6 % of holes with a diameter of 1.8 mm. Through the holes, cold air flows into the fluid bed at a superficial velocity of 2 m/sec. At the top of the bed, 70 cm above the bottom plate, there is an overflow. In the centre of the bottom place there is a liquid distribution device, which is of the type described in European patent 141436. 200 kg/h urea melt of 140°C with 0.5 wt.% water is supplied, and the liquid distribution device is operated with 90 kg/h air of 140°C.

The urea granules (2) leaving the bed are cooled to 40°C and screened on flat deck screens (3,4). Almost 200 kg/h product having a granule size between 2 and 4 mm is obtained, 30 kg/h granules larger than 4 mm and 145 kg/h granules smaller than 2 mm. The dosing rate from the buffer vessel (8) to the size reduction device (11) is 30 kg/h. Size reduction device (11) consists in a double roll crusher set at an average granule size of 1.4 mm. The recycle stream (12) is subsequently screened on flat deck screens (13), granules larger than 2 mm and smaller than 0.75 mm being separated and sent to smelting vessel (15). This is a stream of 7 kg/h. Very stable process operation is achieved. The stream of granules of the desired size is virtually constant. The stream of smaller granules varies between 135 and 155 kg/h, and the stream of larger granules between 26 and 34 kg/h.

Example II

Ammonium nitrate is granulated in a spouted bed granulator (1). The spouted bed is accomodated in a cylindrical vessel with a diameter of 45 cm, which at the bottom has been provided with a conical section that converges downwards at an angle of 30 to the vertical and ends in the air feed tube.

At a rate of 40 m/sec, 400 kg/h air at a temperature of 35°C flows into the apparatus. The granules in the spouted bed have a temperature of 100°C. The overflow is in the cylindrical part of the spouted bed, 30 cm above the transition from the conical part to the cylindrical part.

In the air stream 100 kg/h ammonium nitrate melt of 180°C, with 0.5 wt.% water and 1.5 wt.% $Mg(NO_3)_2$, is sprayed.

The ammonium nitrate granules (2) leaving the bed are passed to a screening device consisting in flat deck screens (3,4) without being cooled. Almost 100 kg/h product with a granule size between 2 and 4 mm is obtained, 10 kg/h granules larger than 4 mm (7) and 75 kg/h granules smaller than 2 mm (6). The crusher (11) is fed at a rate of 10 kg/h. The size reduction device (9) is set at an average granule size of 1.4 mm.

The recycle stream (12) is subsequently screened, the granules larger than 2 mm and smaller than 0.75 mm being separated and sent to a melting vessel. This is a stream of 2.0 kg/h.

The good product is cooled to 40°C in a fluid bed cooler and is then stored. Very stable process operation is achieved. The stream of granules of the desired size is virtually constant. The stream of smaller granules fluctuates between 71 and 79 kg/h, and the stream of larger granules fluctuates between 9 and 11 kg/h.

**Claims**

1. Process for the preparation of ganules from a liquid composition by spraying the liquid composition in a granulation zone onto or over solid particles, present in the granulation zone, that are being kept in motion, as a result of which layered growth of these particles takes place, withdrawing a particle stream from the granulation zone, dividing this stream into a stream of particles of the desired size, a stream of oversize particles and a stream of undersize particles, the stream of undersize particles being returned at least in part to the granulation zone and the stream of oversize particles being stored in a buffer vessel and subsequently being returned at least in part, after size reduction in a size reduction device to a size desirable for use as nuclei, to the grandulation zone, this process being characterized in that the particle stream returned from the buffer vessel to the ganulation zone is kept at a constant flow rate and that the stream of undersized particles is returned directly to the granulation zone.

2. Process according to claim 1, characterized in that, besides the stream of oversize particles, a portion of the stream of particles, a portion of the stream of particles of the desired size is returned to the granulation zone via the buffer vessel and the size reduction device.

3. Process according to claim 1, characterized in that a portion of the particles in the buffer vessel is sent to a melting or dissolving device and the liquid composition formed here is subsequently fed to the granulation zone.

4. Process according to any one claims 1–3, characterized in that a stream of particles having a size smaller than 1 mm is separated from the particle stream being returned to the granulation zone after size reduction, which stream of particles is returned to the granulation zone after dissolving or melting.

5. Process according to claim 4, characterized in that a stream of particles having a size smaller than 0,75 mm is separated from the particle stream being returned to the granulation zone after size reduction, which stream of particles is returned to the granulation zone after dissolving or melting.

6. Process according to anz one of claims 1–5, characterized in that a stream of particles consisting mainly of particles having a size equal to or larger than the desired size is separated from the particle stream being returned to the granulation zone after size reduction, which stream of particles is returned to the granulation zone after dissolving or melting.

7. Process according to any one of claims 1–6, characterized in that granulation takes place in a fluid bed.

8. Process according to any one of claims 1–6, characterized in that granulation takes place in a spouted bed.

## Patentansprüche

1. Verfahren zur Herstellung von Körnchen aus einer flüssigen Zusammensetzung durch Sprühen der flüssigen Zusammensetzung in einer Granulierzone auf oder über feste in der Granulierzone vorhandene Teilchen, die in Bewegung gehalten werden, wobei als Folge dessen ein schichtförmiges Wachstum dieser Teilchen erfolgt, ein Teilchenstrom aus der Granulierzone entfernt wird, dieser Strom in einen Strom von Teilchen mit der gewünschten Größe, einen Strom von Teilchen mit Übergröße und einen Strom von Teilchen mit Untergröße geteilt wird, wobei der Strom der Teilchen mit Untergröße zumindest zum Teil zur Granulierzone rückgeführt wird und der Strom der Teilchen mit Übergröße in einem Pufferbehälter gelagert und anschließend nach Zerkleinerung in einer Zerkleinerungsvorrichtung auf eine Größe, die zur Verwendung als Kerne erwünscht ist, zumindest zum Teil zur Granulierzone rückgeführt wird, dadurch gekennzeichnet, daß der vom Pufferbehälter zur Granulierzone rückgeführte Teilchenstrom bei einer konstanten Strömungsrate gehalten wird und der Strom der Teilchen mit Untergröße direkt zur Granulierzone rückgeführt wird.

2. Verfahren nach Anspruch 1, dadurch gekennzeichnet, daß außer dem Strom der Teilchen mit Übergröße ein Teil des Stromes der Teilchen mit der gewünschten Größe durch den Pufferbehälter und die Zerkleinerungsvorrichtung zur Granulierzone rückgeführt wird.

3. Verfahren nach Anspruch 1, dadurch gekennzeichnet, daß ein Teil der Teilchen im Pufferbehälter zu einer Schmelz-oder Lösevorrichtung geführt und die dort gebildete flüssige Zusammensetzung anschließend zur Granulierzone geleitet wird.

4. Verfahren nach einem der Ansprüche 1 bis 3, dadurch gekennzeichnet, daß ein Strom von Teilchen mit einer Größe von weniger als 1mm von dem nach Zerkleinerung zur Granulierzone rückgeführten Teilchenstrom abgetrennt wird, welcher Teilchenstrom nach Lösen oder Schmelzen zur Granulierzone rückgeführt wird.

5. Verfahren nach Anspruch 4, dadurch gekennzeichnet, daß ein Strom von Teilchen mit einer Größe von weniger als 0,75mm von dem nach Zerkleinerung zur Granulierzone rückgeführten Teilchenstrom abgetrennt wird, welcher Teilchenstrom nach Lösen oder Schmelzen zur Granulierzone rückgeführt wird.

6. Verfahren nach einem der Ansprüche 1 bis 5, dadurch gekennzeichnet, daß ein Strom von Teilchen bestehend hauptsächlich aus Teilchen mit einer Größe gleich oder größer als die gewünschte Größe von dem nach Zerkleinerung zur Granulierzone rückgeführten Teilchenstrom abgetrennt wird, welcher Teilchenstrom nach Lösen oder Schmelzen zur Granulierzone rückgeführt wird.

7. Verfahren nach einem der Ansprüche 1 bis 6, dadurch gekennzeichnet, daß das Granulieren in einem Wirbelbett erfolgt.

8. Verfahren nach einem der Ansprüche 1 bis 6, dadurch gekennzeichnet, daß das Granulieren in einem Gießbett erfolgt.

## Revendications

1. Procédé de préparation de granules à partir d'une composition liquide par pulvérisation de la composition liquide dans une zone de granulation sur ou au dessus des particules solides présentes dans la zone de granulation, que l'on maintient en mouvement, résultant en une croissance en couches de ces particules; soutirage d'un courant de particules de la zone de granulation; partage de ce courant en un courant de particules de la grosseur désirée; un courant de trop grosses particules et un courant de trop petites particules, le courant de trop petites particules étant recyclé au moins en partie à la zone de granulation et le courant de trop grosses particules étant emmagasiné dans un récipient-tampon et étant ensuite recyclé au moins partiellement, après une réduction granulométrique dans un dispositif réducteur de dimension, à une dimension souhaitable pour utilisation comme noyaux, à la zone de granulation, ce procédé étant caractérisé en ce que le courant de particules recyclé du récipient-tampon à la zone de granulation est maintenu à un débit constant et en ce que le courant de trop petites particules est directement renvoyé à la zone de granulation.

2. Procédé selon la revendication 1, caractérisé en ce que'outre le courant de trop grosses particules, une portion du courant de particules de taille correcte est renvoyée à la zone de granulation à travers le récipient-tampon et le dispositif réducteur granulométrique.

3. Procédé selon la revendication 1, caractérisé en ce qu'une portion de particules dans le récipient-tampon est envoyée dans un dispositif de fusion ou de dissolution et, par la suite, la composition liquide formée est envoyée à la zone de granulation.

4. Procédé selon l'une quelconque des revendications 1 à 3, caractérisé en ce qu'on sépare un courant de particules d'une dimension au dessous de 1mm du courant de particules recyclé à la zone de granulation après réduction granulométrique, ce courant de particules étant renvoyé dans la zone de granulation après dissolution ou fusion.

5. Procédé selon la revendication 4, caractérisé en ce qu'on sépare un courant de particules d'une dimension inférieure à 0,75mm du courant de particules renvoyé dans la zone de granulation après réduction granulométrique, ce courant de particules étant recyclé à la zone de granulation après dissolution ou fusion.

6. Procédé selon l'une quelconque des revendications 1 à 5, caractérisé en ce qu'on sépare un courant de particules consistant principalement en particules ayant une dimension égale ou supérieure à la dimension désirée du courant de particules recyclé à la zone de granulation après réduction granulométrique, courant de particules qui revient dans la zone de granulation après dissolution ou fusion.

7. Procédé selon l'une quelconque des revendications 1 à 6, caractérisé en ce que la granulation a lieu dans un lit fluidisé.

8. Procédé selon l'une quelconque des revendications 1 à 6, caractérisé en ce que la granulation a lieu dans lit à jet continu.